**Europäisches Patentamt**

**European Patent Office**

**Office européen des brevets**

(19)

(11) **EP 1 063 604 A1**

(12) **EUROPEAN PATENT APPLICATION**

(43) Date of publication:
27.12.2000 Bulletin 2000/52

(51) Int Cl.$^7$: **G06K 7/00**

(21) Application number: 99202029.7

(22) Date of filing: 23.06.1999

| | |
|---|---|
| (84) Designated Contracting States:<br>**AT BE CH CY DE DK ES FI FR GB GR IE IT LI LU<br>MC NL PT SE**<br>Designated Extension States:<br>**AL LT LV MK RO SI**<br><br>(71) Applicant: **Laquila SA**<br>**6710 Biasca (CH)** | (72) Inventor: **Hefti, Aldo**<br>**6710 Biasca (CH)**<br><br>(74) Representative: **Zardi, Marco**<br>**M. Zardi & Co.**<br>**Via Pioda, 6**<br>**6900 Lugano (CH)** |

(54) **A method of radio-identifying a plurality of passive transponders which transmit an individual code to a common reader that controls an anti-collision protocol**

(57) A method is disclosed of radio-identifying a plurality of objects, each provided with a passive transponder (3) transmitting an individual code to a common reader (4), the latter remote-powering the transponders and handling an anti-collision protocol for code blocks issuing simultaneously from the transponders. The simultaneous transmission of the blocks is produced in a transcoding step whereby the codes are associated in a biunique way with the position of a pulse within a frame. For each pulse read, the protocol creates a node associated with the original code. Thereafter, the reader broadcasts a serial information containing the position inside the extended code and the contents of one of the blocks read. The transponders compare these fields with a local pointer to the read address of a memory word that contains the code blocks, and with the pointed block. Only those transponders for which a match is ascertained will transmit a subsequent block. The aggregate of all these originate further nodes which are joined to a previous one by an equal number of branches of a search tree that discloses all of the existing codes once it has been gone through.

FIG. 3

EP 1 063 604 A1

**Description**

Field of the Invention

This invention deals with radio-identification and remote control, and specifically relates to a method of radio-identifying a plurality of passive transponders that are arranged to transmit an individual code to a common reader handling an anti-collision protocol.

Prior Art

In the field of radio-identification, a hypothetical setting is that of plural entities being placed in a tight ambit, each carrying an individual identification code, it being possible for such entities to be objects, animals, or persons, dependent on the particular applications. In known radio-identification systems, each code is stored in an integrated circuit including a transmitter and whatever else may be needed for transmitting the code to a central receiver, or detector, arranged to serve all the coded entities. The problem of powering integrated circuits, hereinafter referred to as broadcasting tags or transponders, has been solved by remote-powering the tags from the detector, the latter purposely broadcasting a carrier at a different frequency from the receive frequency. Each tag includes a circuit specially for converting the electromagnetic energy picked up by its antenna into electrostatic energy that is stored in the electric field of a capacitor. This removes the need to have a battery provided for the tag, which otherwise would thwart by its cost the benefits issuing from radio-identification.

The expressions "transmitter" and "central receiver" refer here to the main function; it will be appreciated from the above remarks on remote-powering that the broadcasting tags would include a receiver, just as the detector has a transmitter, which makes the transceiving function at either ends of the point/multi-points radio link self-explanatory.

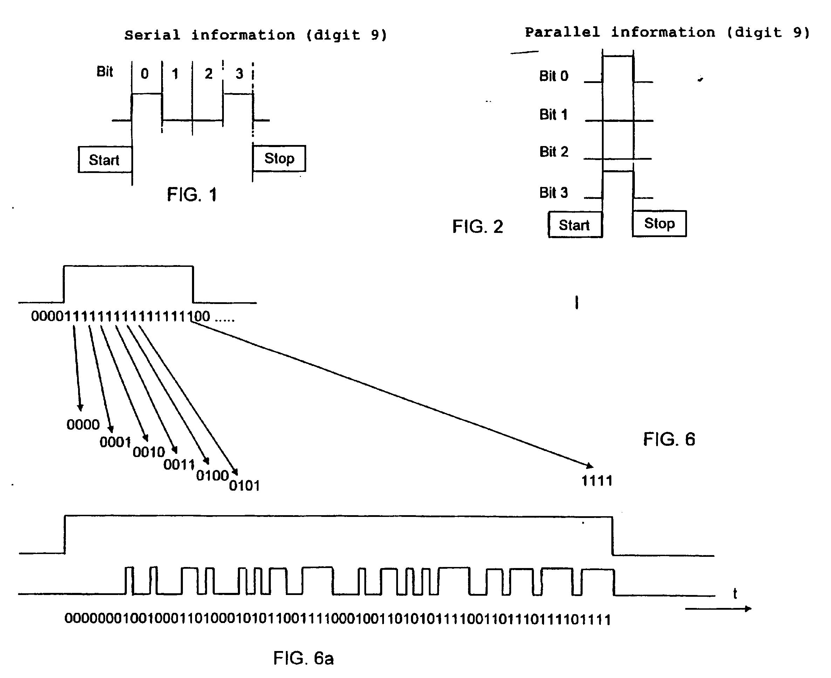

As regards the transmission of the individual binary codes stored in the broadcasting tags, Figure 1 illustrates an example of a code supported by a serial waveform, wherein a single digit "9" (1001) is represented for brevity which takes four bit duration. A complete code, for instance of 8 hexadecimal characters, would produce a serial string of 32 bits. A base-band waveform such as that shown in Figure 1 can be transmitted by digitally modulating (FSK or PSK or ASK) a transmission carrier by means of a readily implemented modulator.

Figure 2 shows this same binary information as parallel transmitted to only take a one bit duration. The parallel transmission illustrated by Figure 2 demands a more complicated modulator than does the serial approach, since the variations in the modulated parameter are required to correspond to the 16 possible digital configurations of the modulating signal. Thus, the serial transmission only will be considered hereinafter.

Serial transmission unavoidably creates a time overlap in the different individual codes as they are broadcast simultaneously by the various tags at the same frequency; by reason of these codes colliding, any discrimination of the codes by a conventional detector becomes impracticable. Were, foe example, two tags are provided -- with a first tag being allotted a 1001 (9dec.) code and the second a 0011 (3dec) code -- the reader would receive 1011, which corresponds to neither of the codes emitted.

International Patent Application No. WO88/03687, published on August 19, 1988, and having the title "Identification System" -- the designated inventor whereof being the same Aldo Hefti of this invention -- fits in this class of systems. Specifically, the identification system of the above reference comprises an interrogator/receiver and a passive transponder. The interrogator/receiver comprises a transmit section which is arranged to transmit an amplified, radiofrequency sinusoidal signal coupled with respect to capacity to an interrogation coil (essentially, an antenna), and comprises a receive section which is connected to the same antenna and incorporates a band-pass filter, having a very narrow band, with a PSK demodulator and a decoder connected downstream. The transponder has an antenna coil coupled to a circuit which is effective to extract the radiated energy from the interrogation coil and store it up to power its own internal circuitry, and an additional circuit for extracting a clock from the received carrier. The extracted clock is then frequency-divided and used for generating a Manchester-coded serial signal from a predetermined code stored in a permanent memory. Said signal drives a PSK modulator provided downstream of a transmitter which uses a transmission carrier having a much lower frequency than the broadcasting frequency of the interrogation coil.

This prior system does not address the problem of collision of several serial codes being simultaneously received by the reader antenna; in fact, the instance of only one transponder is disclosed. Thus, a major disadvantage of the above system, when applied to the reading of a number of codes, is the constraint that it imposes on the transponders of being halted one at a time in the neighbourhood of the detector antenna, such that only the relevant one will be properly remote-powered, while the remaining ones are silent or at most induce collision. At best, this procedure requires a long time for acquiring all the codes, especially where a large number of coded objects are involved and the length of the individual code is considerable in terms of number of bits. To objectively assess the acquisition time, both: - the result of one bit duration multiplied by the sum of the total number of bits of all the codes being read and - the overall transponder detain time at the detector, should be taken into account, the latter time being far longer than the former.

By reason of the inherent limitations mentioned above, conventional sequential read radio-identification systems cannot fill the demand that comes from so many fields of application, for an ability to read codes issuing simultaneously from a plurality of broadcasting tags.

A viable solution could be that of utilizing more than a single carrier for transmitting as many codes in a serial mode. In this case, by allotting as many carriers as there are coded entities, the need for sequential passage in the neighbourhood of the detector can be avoided. However, the implementation of such a radio-identification system would prove too cumbersome and expensive for most applications, because a detector consisting of a multi-carrier transceiver requires complex filters for channel separation.

Objects of the Invention

It is an object of this invention to overcome the drawbacks of prior art radio-identification systems and provide a radio-identification method which enables the detector to identify binary codes of short length, being transmitted on a single carrier concurrently from a reasonably limited number of broadcasting tags.

Another object of this invention is to provide a radio-identification method as above, which can also identify extended codes.

A further object of this invention is to provide a radio-identification system constructed in accord with the above inventive method.

Summary of the Invention

The above objects are achieved by this invention providing a method of radio-identifying a plurality of coded entities, each having a transceiver for transmitting an individual identification code to a common transceiver preferably arranged to remote-power the transceivers of the coded entities, characterized in that it comprises the following, cyclically repeated steps:

- broadcasting, from the common transceiver end, a synchronization code to mark the beginning of a transmissive frame of the serial type shared by all the transceivers;

- recognizing, at the transceivers end, the coded entities of said synchronization code, and converting the individual code to a pulse located in a biunique way within the transmissive frame;

- receiving, at the common transceiver end, the pulses transmitted within said transmissive frame by the transceivers of the plural coded entities, and reconverting the positions of the received pulses to the original individual codes, also as disclosed in Claim 1.

Advantages of the Invention

It can be evinced from the foregoing that the radio-identification method of the invention can effectively identify codes that are being transmitted "simultaneously" from the broadcasting tags on a single carrier. In this respect, it represents a radical departure from prior methods, a basic feature whereof is that they recognize the codes sequentially, thereby compelling the broadcasting tags to stand one at a time near the detector antenna.

In the presence of short binary codes, the method of this invention also provides faster recognition than the sequential method. For example, in a setting where 10 objects coded with a 4-bit code are identified by sequential transmission of the codes, the acquisition window would be of 40 bits in the state of the art, as against the 16 bits of the inventive method. (16 is the value which expresses all the configurations allowed by the 4 bits of the code, and hence, the largest number of different positions that a bit can take within the frame.)

As the number n of bits of the individual code grows, the type of positional coding of the inventive method ceases to be convenient, in that the number of frame bits, and hence the length of the time window, would increase as $2^n$. For example, with n=32, there would be frames with as many as 4,294,967,296 bits! It can be appreciated that, even in the presence of a reasonably large number of 32-bit coded entities, with their codes transmitted sequentially as in the state of the art, frames of such length would never be attained.

It should mentioned here that the length of the individual code is a binary variable whose maximum value is bound to increase with the number of the coded objects, if an ability to recognize the individual objects is to be maintained. The value thus found is usually added with more digits, which may serve to identify a production batch of the coded objects, for example. These digits ultimately expand the code size, so that extended codes are far from being an unlikely occurrence.

Where the radio-identification method of the invention is to be used in connection with extended individual codes, such as 32-bit codes, the width of the acquisition time window should be brought down to a practical value. Here again, a mere reduction of the window would inevitably result in codes colliding, and make recognition impossible. As said before, an object of this invention is to provide a modified method that can accommodate extended codes.

Accordingly, also provided by this invention is a radio-identification method applied between a detector and a plurality of transponders preferably remote-powered from the detector, a generic transponder being associated with a respective entity which is allotted an individual code written into a memory of the transponder, characterized in that it comprises the following steps:

a) converting, at the transponder end, the binary code expressed by code blocks of equal length which share the same positional value in all the transponders into biunique positions of as many pulses transmitted within a serial frame shared by the transponders and the detector;

b) allotting, to the detector end, as many code identification nodes as there are pulses read from the received frame, it being possible to locate the nodes individually by allotting the original code blocks that result from the positional re-conversion of the pulses being read;

c) broadcasting an information from the detector to the transponders for selectively urging one or more of the transponders to repeat step a) for the transmission of a code block positioned adjacent to the last transmitted block;

d) revealing, at the detector end, any possible previous identity of partly read codes, also referred to as collision, by reading more than one pulse from the received frame, thereby determining new nodes at the transponder end linked to a preceding one by branches of a sequential search tree;

e) updating the node coding by cumulating the code blocks resulting from the positional re-conversion of the pulses being read;

f) iterating steps c), d) and e) above until all the code blocks available to all transponders are exhausted, thereby having gone completely through the branches of the search tree and having identified all the original codes in the final value of the code associated with the terminating nodes, as stated in Claim 2.

It can be appreciated that, contrary to what has been stated above, the generic broadcasting tag is now capable of receiving coded information transmitted back from the detector. This process corresponds to defining a protocol effective to rule the communication between the detector and the broadcasting tags. The operation of the latter is, therefore, somewhat similar to that of a true transponder, that is, the tags can receive and transmit "information" through the channel, and the term is now better qualified.

A substantial advantage brought about by the modification of the method is that the overall time for acquiring all the transmitted codes becomes practically controllable and far shorter than the length of an acquisition window as defined by the mere pulse positional transcoding of the extended code. The method uses the selective code emission by the transponders, which emission occurs through a number of sequential frames, combined with the concurrent emission of the codes within the individual frames. The modification retains the same advantages as the state of the art, which now apply to the extended codes as well.

An additional advantage is that, even in the presence of a collision, it is always possible to work back to the codes of any objects sharing it, to only leave their number uncertain. Of course, the broadcasting tags will become somewhat more complicated in consequence of the expanded protocol, which did not exist before; however, this will affect production costs only marginally where modern manufacturing technologies are employed.

The invention is also directed to a radio-identification system which comprises a detector and a plurality of transponders operated in accordance with the protocol specified by the inventive method, as stated in Claim 11.

The art of radio-identification by individual codes will benefit considerably from the present invention being open to all conceivable applications. For example, the coded entities could be movable, provided that the receive delays due to the transponders different distances from the detector can be made negligible, this being the condition for the transmitted pulses to retain their correct positions within the transmissive frame. This condition reflects in the need to have the transponders situated within a confined space, obviously close to the detector, since the power available to remote-powered transponders is low.

Brief Description of the Drawings

Further objects and advantages of this invention will become apparent from the following detailed description of an embodiment thereof, and the accompanying exemplary and non-limitative drawings, in which:

Figures 1 and 2 shows two respective waveforms obtained with two known methods of transmitting digital signals;

Figure 3 illustrates an exemplary application of a radio-identification system according to this invention;

Figure 4 is a functional block diagram of a broadcasting tag of Figure 3 according to the invention;

Figure 4a is a functional block diagram of a detector of Figure 3 according to the invention;

Figure 5 shows base band waveforms as obtained with the method of this invention and transmitted from the broadcasting tags of Figure 3;

Figures 6 and 6a show comparative serial waveforms for the same sequence of binary codes, as obtained from those in Figure 5 and Figure 1, respectively;

Figure 7 is a functional block diagram of a transponder of Figure 3, according to a modified embodiment of the invention;

Figure 7a is a functional block diagram of a detector of Figure 3, according to a modified embodiment of the invention;

Figures 8a, 8b and 8c show waveforms as received by the detector of Figure 7a;

Figure 9 is a chart illustrating the various sequential steps of the method according to the modified embodiment as applied to the recognition of three individual codes transmitted from as many transponders of Figure 7; and

Figure 10 is a schematic state diagram illustrating synoptically one aspect of the table in Figure 9.

Detailed Description of Some Preferred Embodiments of the Invention

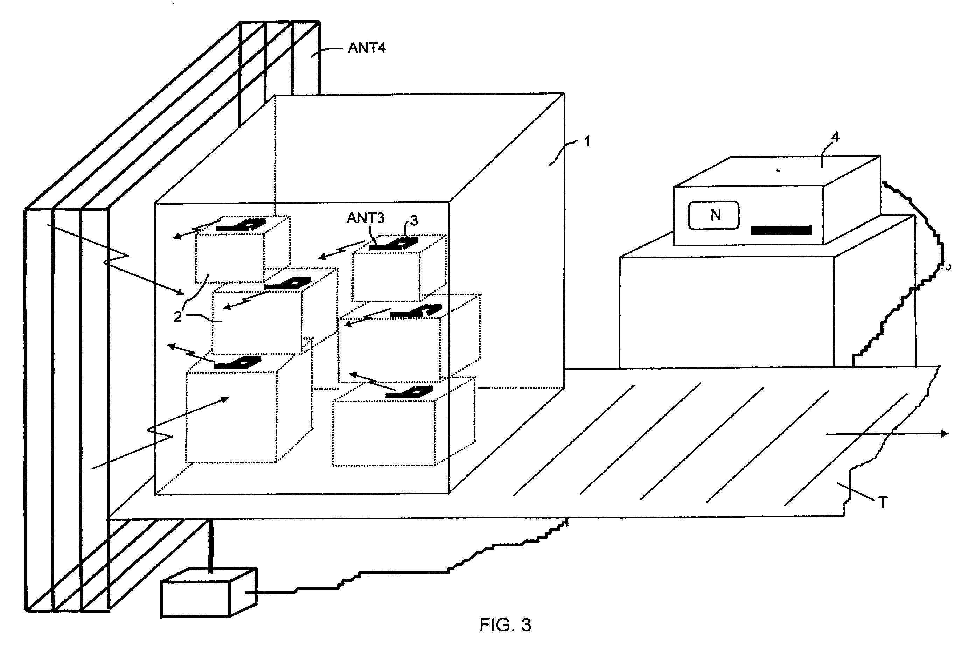

Shown in Figure 3 is a radio-identification system according to this invention applied to recognizing the presence of objects inside a sealed container. Referring to Figure 3, there is shown a sealed package 1 which contains a plurality of objects 2, each equipped with a small transmitter 3 which is connected to an integrated antenna ANT3 for transmitting its individual code to a loop antenna ANT4 belonging to a single receiver 4 with detector function. As can be seen, the loop antenna ANT4 is of adequate size to admit the container 1 and an associated belt conveyor T through its opening.

In this case, the aforementioned conditions for applicability of the inventive method, such as the accommodation of the encoded entities within a limited space and the proximity of the broadcasting tags 3 to the antenna ANT4 of the detector, are all met. In this case, low electric power can be supplied to the remote-powered tags 3 from the antenna ANT4 for transmitting the individual codes while retaining a good value of the signal/noise ratio at the input of detector 4. Accordingly, a remote-powered transmission circuit for attachment to objects, even of humble value, appears quite practicable. Same references will be used hereinafter to denote common elements throughout the figures.

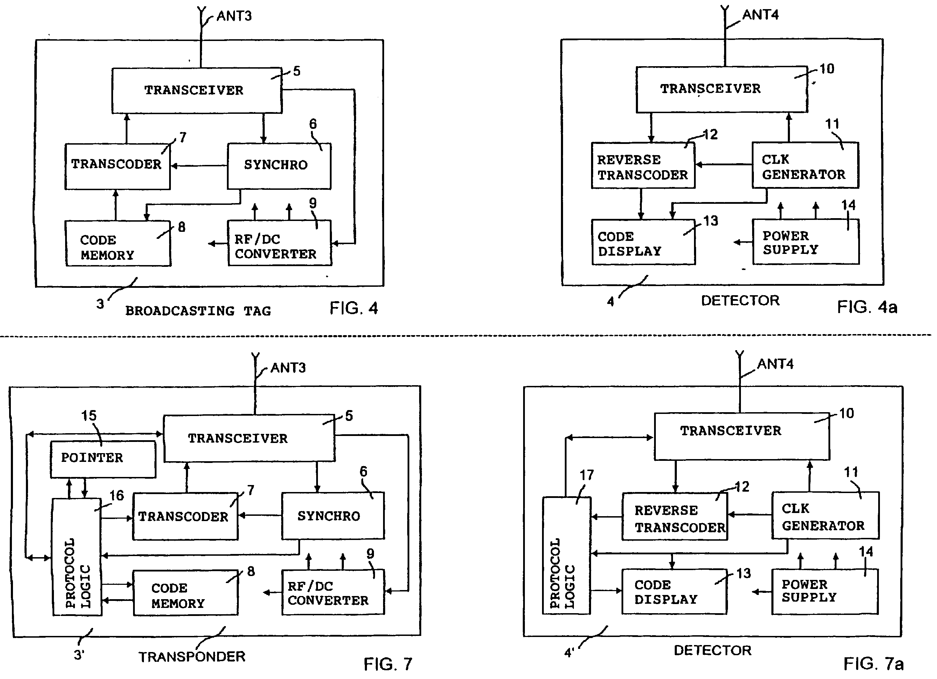

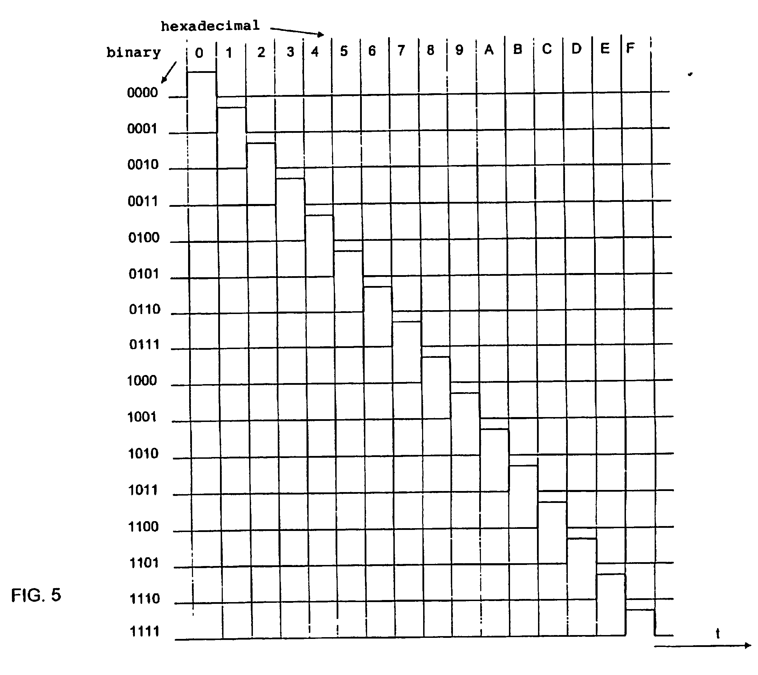

Referring to Figure 4, the block BROADCASTING TAG 3 is shown to include a transceiver 5, a synchronizer 6, a transcoder 7, a memory 8 for storing a binary code individually allotted to the broadcasting tag 3 during its manufacture, and an RF/DC converter 9. The transceiver 5 is connected to the integrated antenna ANT3, as well as to the synchronizing 6, transcoding 7 and RF/DC converting 9 blocks. The transcoder 7 is further connected to the synchronizing block 6 and the code memory 8, with the latter being further connected to the synchronizing block 6. The RF/DC converter 9 is connected to all of the above blocks.

Referring to Figure 4a, the block DETECTOR 4 is shown to include a transceiver 10, a local clock generator 11, a reverse transcoder 12, a code display 13, and a power supply 14. The transceiver 10 is connected to the loop antenna ANT4, as well as to the clock generator 11 and reverse transcoder 12 blocks; the last-mentioned block is in turn connected to the clock generator 11 and the display 13 blocks. The power supply 14 is connected to all of the above blocks.

In operation, the transmit section of the transceiver 10 in the detector 4 sends a transmission carrier for remotely powering and synchronizing the plurality of broadcasting tags 3. The receive section of the transceiver 5 in each broadcasting tag 3 receives the transmitted carrier and relays it to the RF/DC converter for extracting the power required to operate the circuitry comprising the tag 3. The RF/DC converter is a circuit known per se, and corresponds essentially to a full-wave rectifier; the output of this block is connected to all the other circuit blocks shown and keeps them supplied. The received carrier is also passed to the synchronizer 6, which will use it to control the frequency and phase of a carrier generated locally and used as a clock signal for the operations of reading the individual code, as well as for transcoding in a manner to be described. The transcoded signal is sent to the transmit section of the transceiver 5 for the digital (FSK or PSK or ASK) modulation of a transmission carrier having a different frequency from the remote-powering carrier.

The receive section of the detector 4 receives the modulated carrier from all the broadcasting tags 3 simultaneously, and then demodulates the combined received signal to obtain a demodulated signal restoring the configuration of the pulses transmitted by the plural broadcasting tags. The demodulated signal is sent to the reverse transcoder 12 which extracts the original codes; the latter are sent to the display 13 for their display or printing out.

Figure 5 shows the type of coding performed by the transcoding block 7 on all the broadcasting tags 3 present, in a situation of full utilization. Shown in the Figure are impulsive waveforms, each including a pulse at a logic high value positioned in a serial frame whose length corresponds to the sum of the bit duration when the largest number of pulses are provided. The information for marking the start of the frames is present in the remote-powering carrier from the detector 4. This choice is a convenient one, but not limitative; in fact, the frame start could be established independently by each transponder following, of course, their synchronization to the received carrier. The Figure shows the pulse of one waveform being delayed by a bit duration from the previous waveform. Shown in the left-hand portion of the Figure is an orderly sequence of 4-bit binary codes, wherein each code is associated with a respective one of the impulsive waveforms. In the top portion of the Figure, each pulse is identified by a hexadecimal code. It can be seen that the binary, or hexadecimal, value encodes the position in time of the pulse within the frame as expressed in bit duration. The detector 4 has no means of resolving collisions among codes, and accordingly, a feature of the method is that the largest number of pulses provided in the frame should be larger than or the same as the number of coded objects. It is only on this condition that the coded pulses can be allotted univocally to the broadcasting tags. Reference can be made to the introductory paragraphs for the advantages and features of this method. In the claims, which are based on the description given in relation to Figures 4 and 4a, the expressions "common transceiver" and "transceiver associated with the coded entities" may replace the expressions "detector" and "broadcasting tag" as being more appropriate in view of the fact that encoding and decoding (in this case, transcoding and reverse transcoding) functions are in concept those typical of transceiver.

Figure 6 shows a waveform as received by the detector 4 when the ensemble of the trasponders 3 are transmitting all of the pulses shown in Figure 5. Since the largest provided number is 16 transponders, the waveform of Figure 6 is a pulse 16 bit duration long.

Figure 6a illustrates the instance of a serial transmission of the same orderly succession of 4-bit binary codes as that which originated the pulse of Figure 6. It can be seen that the transmission duration, indicated by the upper window, is four times the length of the pulse of figure 6. It is therefore shown that, at least with codes of short extension, the transcoder 7 affords higher speed than a purely serial transmission, and most importantly, allows of the simultaneous transmission of the coding pulses from all the transponders 3, without resulting in overlapped reading by the detector 4. The discussion of the next Figures will introduce a modification that effectively removes the restriction imposed on the code lengths.

Referring to Figure 7, there is shown a TRANSPONDER 3' which differs from the broadcasting tag 3 of Figure 4 by the provision of two additional blocks referred to as the pointer 15 and the protocol logic 16, respectively. The block 15 is a register containing a pointer to the address of a word in the memory 8 that relates to a fraction of the stored code. The block 16 is a logic performing protocol functions in the communication with the detector. As for the connections in Figure 7 being different from those in Figure 4, it can be seen that the code memory 8 is connected here to the block 16 only, which block is connected to the synchronizer 6, the transcoder 7, the register 15, and the transceiver 5.

Referring to Figure 7a, there is shown a DETECTOR 4' which differs from that shown in Figure 4a by the provision of an additional block 17 representing schematically a logic devoted to protocol functions in the communication with the transponders 3'. The block 17 is connected to the reverse transcoder 12, the clock generator 11, the transceiver 10, and the code display 13. There is no direct connection provided between the blocks 12 and 13.

The operation of the radio-identification system of the modified embodiment, obtained by the transponder 3' of Figure 7 and the detector 4' of Figure 7a, is more complicated than that discussed in relation to Figures 4 and 4a. This is mainly due to the fact that a impulsive coding like that of Figure 5 is no longer applicable when extended to include the whole code, on account of the great length of the individual binary code. The modified method does not forfeits, however, all the advantages of such coding, but uses this coding limited to adjacent blocks having the same length of the extended binary code, stored in as many consecutive words of the memory 8. This involves the introduction of sequential coding/decoding operations for resolving the whole code. To properly carry out these operations, an orderly communication of the detector 4' with the set of transponders 3' becomes mandatory. The communication is governed by an appropriate protocol to be applied by the detector and the transponders, alternately. The most convenient starting assumption is that different codes are allotted to different objects; nevertheless, due to the sequential processing of the code blocks performed by the protocol, a full discrimination of all the codes will only end after the detector has finished reading the last code block transmitted (in the pulse position transcoding mode) by all the transponders. In the meantime, a temporary collision is most likely to occur among code blocks associated with the various transponders, during a generic reading operation. The method described herein below can resolve the temporary collisions, and come to discriminate all of the transmitted codes within acceptable times in actual practice.

The protocol is based essentially on alternating two of the steps that account for most of the read time duration. During a first of these steps, the detector 4' broadcasts, toward the transponders 3', information in the serial mode with binary representation, and during the second step, the transponders process the received information, and one (or at most a few) of them, being selectively urged by the received information, sends the next code block to the detector. Specifically, the information sent by the transponder 4' will reach the transceiver 5 of all transponders 3' and be sent thereby to the block CONTROL LOGIC 16. As explained herein below, the block 16 inspects the received information, reads the value of the pointer 15, reads a word from the memory 8 and, dependent on the outcome of these readouts, increases or decreases the value of the pointer 15 so as to read, where appropriate, the next word to be sent to the transcoder 7 in order to have a suitable pulse generated for transmission by the transceiver 5. Since the code blocks of a generic transponder lie adjacent to one another, the increase of the pointer 15 brought about by the protocol logic block 16 provides the position of the next code block within the extended code structure.

The serial information to be broadcast from the detector 4' toward the transponders 3' is first independently composed by the block CONTROL LOGIC 17 of the detector 4', in accord with a sequential tree reading strategy starting from the analysis carried out on the return signal from the reverse transcoder 12. In general, the serial information will comprise the following fields:

1. the bits of the code Block;

2. certain bits which encode the Position of the code block within the extended code;

3. a bit which encodes the code reading Mode by the detector 4', and hence, the transmitting mode of the information concerning the individual codes by the transponders;

4. Security bits for the transmitted data.

The code block is a set containing an arbitrary number of bits of the extended code; since the length of the code block is the same for all blocks, the total number of bits of the extended code should be divisible by the number of blocks, without remainder. As previously explained, all of the possible binary configurations expressed by a code block produce as many different positions of a pulse having a one bit duration within a time window, which becomes therefore dependent on the code block length. The following table summarizes the foregoing.

| Time Window (Number of positions of the encoded pulse) | Code Block | | Length Of a Block (bits) |
|---|---|---|---|
| | Minimal Configuration | Maximal Configuration | |
| 100 (Dec) | 00 (Dec) | 99 (Dec) | 7 |
| 16 (Hex) | 0 (Hex) | F (Hex) | 4 |
| 32 (Hex) | 00 (Hex) | 1F (Hex) | 5 |
| 1000 (Dec) | 0 (Dec) | 999 (Dec) | 10 |

In the following table, the "Subdivisions of the Extended Code" field indicates the type of clustering into blocks performed and the maximum number of characters per block. The "Number of positions" field indicates the number of blocks in the preceding cluster. The "Bits Required" field specifies the number of bits needed to encode the position of the individual block.

| Extended Code | Time Window | Code Block | Subdivisions of the Extended Code | Number of Positions | Bits Required |
|---|---|---|---|---|---|
| 999999 | 100 | 00...99 | dd dd dd | 3 | 2 |
| FFFF FFFF | 16 | 0...F | h h h h h h h h | 8 | 3 |
| FFFF FFFF | 32 | 0..1F | hh hh hh hh | 4 | 2 |
| 999'999 | 1000 | 000...999 | ddd ddd | 2 | 1 |

As for the "Code Read Mode by the Detector 4'" field, the logic value of the bit purposely sent to all transponders 3' indicates the following modes:

> **normal:** the detector 4' requests delivery in serial mode of the extended binary code from the transponders 3', excluding thereby delivery of the encoded pulses. Of course, this mode will only apply if only one transponder is active within the antenna range; otherwise, the transmitted pulses would overlap, as previously mentioned, and soon produce a condition of invalidity of the received signal at the detector 4': for example, the CRC (Cyclic Redundancy Check) condition for cyclic parity, wherewith all serially transmitted signals are generally to conform, would not be met. This mode of operation allows the system of this invention to be used even for applications that best suit prior art systems, and it is in this respect that this mode is called normal;

> **master:** the detector 4' requests the transponders 3' to deliver a single specific code block, after transcoding to the pulse position; this is the mode typical of the invention.

As for the "Security of the Transmitted Data" field, bits are provided as required for the security of the reading performed by the transponders 3'; it may be necessary to introduce one or more control bits (handshake, parity, etc.), possibly used for such particular commands as repetition of the last unit transmitted.

The serial information broadcast by the detector 4' is received by the generic transponder 3' and passed to the block CONTROL LOGIC 16 for decoding, to determine the transponder behaviour. Considering the instance of an input in the MASTER mode, the logic 16 is to take account of two fields in the received information, namely the Position and Value of a code block. A matching condition of the two informational fields with the values of two analogous fields stored in the transponders 3' triggers the delivery of a successive code block only from the transponders 3' that do match. The comparison is effected by reading the current value of the pointer stored in the register 15, before this is possibly incremented for reading a successive block, and by further reading the contents of memory 8 at the address specified by the pointer.

Following are a few examples of the various steps of the operational protocol. For the purpose, three exemplary readings of the downlink-received serial information as carried out by the transponders 3 have been put in table form. The "Normal" mode of operation is set by the detector 4' before each exhaustive search through all the codes present. The command to the transponders 3' consists of a serial string of all 1's. The following table regards a first reading which specifies this mode of operation.

| Protocol | | | Transponder | |
|---|---|---|---|---|
| Position | Code Block | Mode | Action | Local Pointer |
| None | None | Normal | Serial Sending of Code | NULL |

As can be seen, no blocks are selected, and hence, no positions. The local pointer has a null value (NULL) that should not be mistaken for a zero value. The value NULL points to no location in the memory 8, unlike the zero value which points to the first of the stored words, by definition. This discrimination will come useful for the purpose of the second reading. Where only one transponder is present, the immediately decoded code will be regarded valid. In the presence of several codes, a collision is sure to be detected, and the detector 4' will enter the "Master" mode by placing the bit of the "Mode" field at 1 and sending downlink a serial string of all zeroes which can be used to advantage for synchronizing the start of the serial frames in order to send the code blocks in the positional transcoding mode of the pulses previously described. The following table relates to a second reading instructing a change of mode of operation:

| Protocol | | | Transponder | |
|---|---|---|---|---|
| Position | Code Block | Mode | Action | Local Pointer |
| 0 | None | Master | Sending a one bit to the time position defined by the first character (zero) | Pointing the first character |

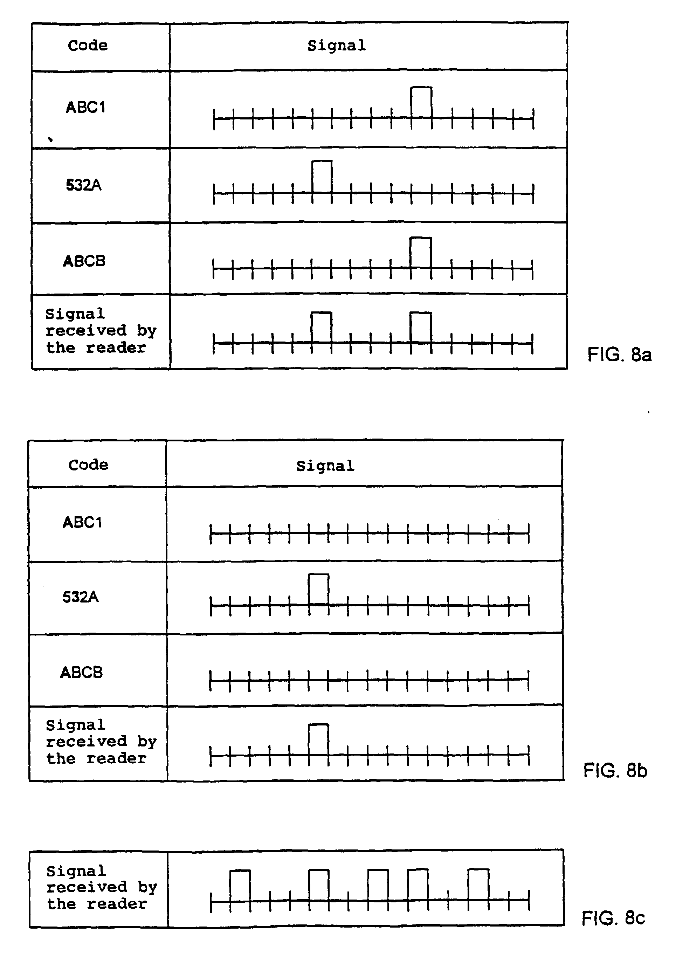

As can be seen, the zero position is arbitrarily selected to be the start position for transmitting the code blocks. However, no code block is selected at this position, which means that all the transponders 3' will be sending their code block (also called character) stored at the zero position. It becomes clear, then, that the pointer to the value NULL will prevent the serial string of all zeroes sent to the detector from being mistaken by the transponders 3' for a condition of selection of a "0" character at the zero position. It is important at this stage that all the transponders 3' be sending their character, regardless of which this may happen to be. Figure 8a illustrates a case of three transponders being present and allotted each a code of four hexadecimal characters, namely ABC1, 532A, ABCB. Shown in the left-hand portion of the Figure are the corresponding coded impulsive waveforms associated with the character that occupies the first transmit position of the extended code, arbitrarily selected to be the leftmost. The last line shows the waveform received by the detector 4', where the overlap of the previous ones is plainly evident.

The detector 4' recognizes the presence of at least two transponders whose codes begin with A and 5, and makes room for two codes, Cod1='5' and Cod2='A', and two search nodes, one for completing Cod1 and the other for completing Cod2. At this point, the generic transponder 3' will have set the local pointer to the position of the first block sent (zero position), and be ready for a third type of readings that will be reiterated on command from the detector 4' until the whole code is sent out. Assuming a case where the detector 4' chooses to read a block from the node designated 5, the following table covers this third type of reading:

| Protocol | | | Transponder | |
|---|---|---|---|---|
| Position | Block Binary | Mode | Action | Local Pointer |
| 0 | 0101 | Master | If pointer is pointing position "0" and the latter contains the character '0101', then: *Send a one bit to the time position defined by the second character;* otherwise: *Stand by* | If pointer is pointing position "0" and the latter contains the character '0101', then: *Point second character;* otherwise: *Stand by* |

Only those transponders 3' will respond for which the local pointer is set to position "0" and the pointed character is '5'. All the others will be standing by. Figure 8b illustrates this case. The detector 4' completes the code Cod1 with Cod1 = Cod1 + '3' = '53', and so on, until the code Cod1 is fully updated. Once the node '5' is completed, the same operation is carried out at node 'A' . Every time that the reader receives a signal with several pulses, it first generates as many nodes as there are pulses, and then divides the code Cod1 into as many codes as there are new nodes, as shown by the following example of a situation where, starting from a node which has been coded with the current Code C1='AB31', the detector 4' is reading five pulses, like those shown in Figure 8c, from the received signal. In this case, five coded nodes would be created as follows:

Node: '1' C11='AB311'

Node: '5' C12='AB315'

Node: '8' C13='AB318'

Node: 'A' C14='AB31A'

Node: 'D' C15='AB31D'

In this case, the old node C1 will be linked to the new nodes C11, C12, C13, C14 and C15 by as many branches which, by spreading through sequential reading operations, will form a search tree that, once fully run through, enables the detector 4' to tell which codes and how many are simultaneously present in the field of the antenna ANT4 of Figure 3. Once all the codes are read, the protocol provides for the reiteration of all the previous steps, including the initial one, in the "Normal" mode of operation.

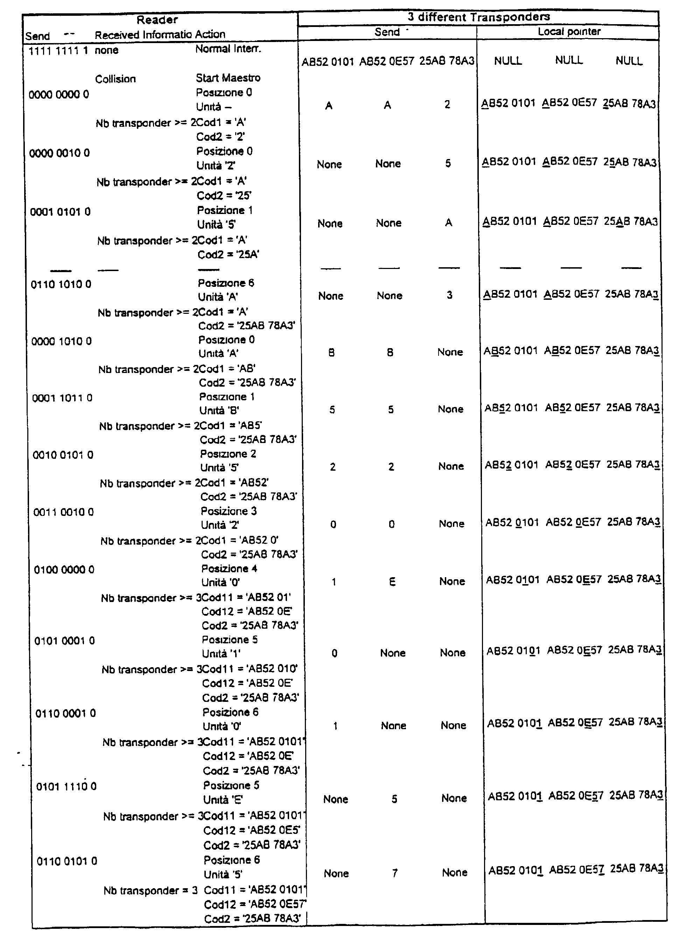

Figure 9 illustrates in table form a complete example of the decoding of three codes of 32 bits each, associated with the following three transponders:

transponder 1, code Hex AB52 0101;

transponder 2, code Hex AB52 0E57;

transponder 3, code Hex 25AB 78A3.

The table contains nothing conceptually new, with respect to the previous description of the protocol, but will be briefly discussed. Before that, it may be useful to point out some further advantages of the modified method just described, among them:

-    A first advantage is that the read time duration is shortened by selecting to have the decoding started from those parts which are identical in all codes. In general, the first digits to one side or the other of the individual code are quite similar for transponders belonging to the same production batch or batches produced in close succession.

-    A second advantage is that a code can be determined in any case even in a situation of total collision.

-    A third advantage is that by this method it is possible to calculate the longest duration for decoding, as explained hereinafter.

-    A fourth advantage is that the reiteration of the initial serial transmission step in the "Normal" mode allows resetting of all the pointers, to thereby acquire any new transponder which might enter or exit the receive field of the antenna ANT4 (Figure 3), or of the pointer values temporarily corrupted, which renders the performance of the radio-identification dynamic.

As regards the computation of the longest decoding time duration, let t be a one bit duration, P the protocol bits, M the largest number of positions, F the extension of the time window, Ni the number of nodes at positions i, and C the code bits. Based on this assumption, and considering first the instance of a single transponder transmitting serially in the "Normal" mode, it is:

$$T = (P + C) * t$$

Considering the "Master" mode, that in the most favourable of cases would be represented by codes having information units that are all identical excepting the right-most one, it is:

$$T = [(P + C) + M * (P + F)] * t$$

In the least favourable of cases, represented by the presence of all possible codes, it is:

$$T = [(P + C) + M * F * (P + F)] * t$$

In the normal case, it is:

$$T = \{[(P + C) + \Sigma[(P + F) * Ni*F]\} * t;$$

where $1 \le i \le (M-1)$.

Referring to Figure 9, it can be seen that the table therein shows two sections: a first (Reader) relating to the actions by the detector 4' (Figure 7a), and the second referring to the actions by three different transponders 3' (Figure 7). The first section comprises a first column (Send) reporting the serial information broadcast by the detector 4', followed by a second column (Received Information) reporting what the transponders make out of the received information, and by a third column "Action" where the actions taken by the detector 4' according to the uplink-received information are reported. The second section comprises a first sub-section "Send" of three columns and a second sub-section "Local Pointer" also of three columns, for as many transponders 3'. The table lines relate to successive times during the protocol flow; in addition, the expression "Code Unit" replaces the expression "Code Block" used so far. The first table line relates to the initial step in the "Normal" mode, where all the transponders send their codes serially and cause collision. Shown in Section 1, Column 1, is the string of all 1s issued by the detector 4' to initiate this step. Shown in Section 2, Sub-section 2, is that the local pointers of the three transponders 3' have the value NULL. Upon detection of the collision, the "Master" mode is entered, which corresponds to the string of all 0s in Column 1, Section 1. It can be seen at this stage that the transponders respond to the string of all 0s by sending the first code unit at the left extremity, assumed to be the zero position. Reported in the three columns of the second sub-section is that the respective pointers will point to characters A, A, 2 at position 0. Since the previous value of the pointers was NULL, it can be seen that the transition to the "Master" step produces the selection of no particular code Unit by the detector 4' in order to focus the reading, as shown in Column 3, Section 1, where nothing is reported for the "Unit" entry. Upon reception of the three characters, two nodes coded Codl'A' and Cod2'2' are created. At this stage, the detector 4' decides to begin acquiring the code of the third transponder, and sends back the required information for selecting the next code Unit from this transponder. Said information corresponds to a Unit '2' and position 0. The third transponder is the only one to reveal a match of its current state with the received information, the remaining transponders producing no action and their pointers staying set to position 0. All this is repeated until the reading of code '25AB 78A3' is completed; at each new reading, the detector 4' updates the code Cod2 that identifies the first node. In the end, the protocol will update the second node, whereby the detector 4' sends back information corresponding to a code unit 'A' at position 0. The first and second transponders will respond, but not the third. The protocol keeps updating this second node, there being no need to create more nodes because, during the following steps, the first and second transponders will respond jointly until a value 'AB52 0' is attained. The next reading involves the recognition of a previous collision and creation of two additional nodes, namely a third node Cod11 associated with the code 'AB52 01' and a fourth node Cod12 associated with the code 'AB52 0E'. The two additional codes sprout from the node Cod1 into two branches which indicate the two discrete code values. The protocol decides to continue reading from the node Cod11, whose code is updated in the manner described hereinabove, onwards until a value 'AB52 0101' is attained without any further collisions being detected. After that, the code associated with the node Cod12 is updated until a value 'AB52 0E57' is attained, and the protocol ends the recognition since there are no more nodes to inspect.

The above example based on three codes represents no limitation to the applicability of the protocol in the instance of a large number of transponders 3' being present within the receive range of the antenna ANT4. In this case, the protocol recognition time duration would be just longer, since more nodes would be generated during the processing.

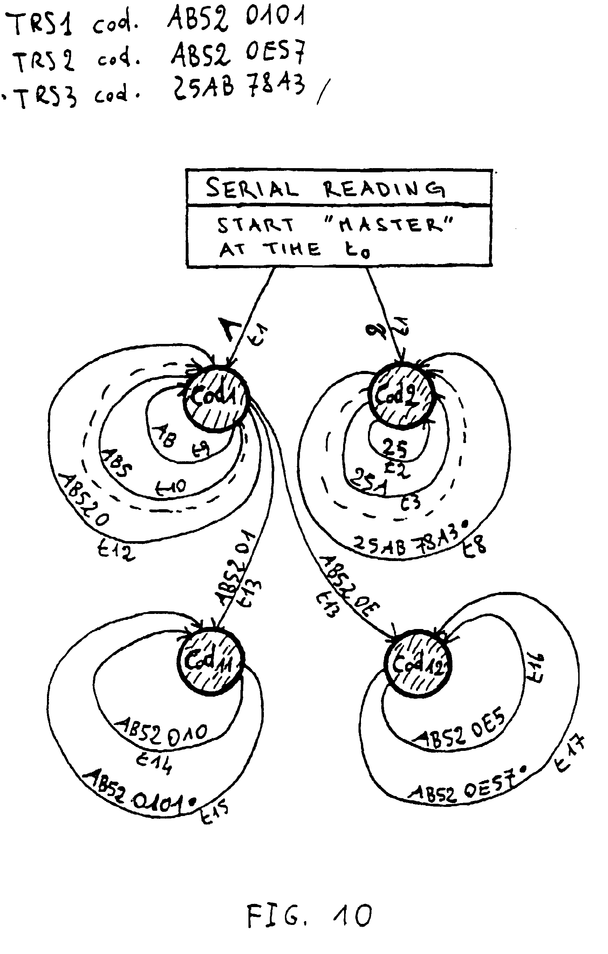

Illustrated synoptically by Figure 10 is only the aspect of the table in Figure 9 which relates to the progression in the reading of codes and updating of the node codes. There can be seen an initial step "SERIAL READ" followed by transition to the mode "MASTER" at time to. The reading at time to shows the concurrent presence of the codes 'A' and '2', which are associated with two respective branches extending from the rectangular initial block to the nodes Cod1 and Cod2. The next readings, from time $t_2$ to time $t_8$, are devoted to fully updating the code of the node Cod2, whose final value will correspond to the code '25AB 78A3' of the third transponder. At subsequent times, from $t_9$ to $t_{12}$, the code of the node Cod1 is updated, up to a value 'AB52 0', and the next time $t_{13}$ reveals the existence of a previous collision at Cod1, originating two branches 'AB52 01' and 'AB52 0E'. These branches are directed to the two new nodes Cod11 and Cod12, respectively, which nodes will take these code values temporarily. Times $t_{14}$ and $t_{15}$ complete the reading of the code 'AB52 0101' of the first transponder, and times $t_{16}$ and $t_{17}$ complete that of the code 'AB52 0E57' of the second transponder. Figure 10, however schematic, helps to explain the distinction existing between two different types of nodes in the search tree: the intermediate nodes and the final nodes. The former are nodes whence branches sprout to subsequent nodes, such as Cod1, and the latter are nodes that no longer generate new branches, cf. Cod2, Cod11 and Cod12. Only the latter will, once updated, return the individual codes completely.

The exemplary, non-limitative embodiment of the invention thus far discussed highlights the potential benefits of using a communication protocol between the detector 4' and the plurality of transponders 3'. As described in the foregoing, the protocol utilizes the downlink transmission of serial information, which is responded by an uplink transmission of coded pulses. There exists, moreover, a short initial stage when the extended codes are transmitted serially uplink by all the transponders that are susceptible of collisions. The protocol master is, beyond doubt, the detector 4', which has the advantage of providing remote control of the transponders 3', in order to select those transponders, in the extreme one only, which meet certain requirements. Figures 7 and 7a illustrate, in fact, the functional blocks PROTOCOL LOGIC that sustain this communication. An improvement may now be introduced in the protocol to boost the serial transmission by the transponders 3', thereby broadening the types of transmitted information and better focussing the addressing from the detector 4' such that a single transponder will be reached uniquely. The improvement consists of lengthening the "Mode" field, presently of one bit, so that further modes of operation can be selected for the radio-identification system, additionally to the two modes previously discussed. Concurrently therewith, the internal logic of the blocks PROTOCOL LOGIC 16 and 17 is made suitable to sustain the new modes of operation. A first of these modes, of particular interest here, regards the manner how the detector 4' controls a specific transponder 3' to cause it to write particular information into its internal memory 8 (Figure 7). A second mode is the dual mode that enables the detector 4' to read words from the internal memory of a selected transponder. These modes are sustained by a serial exchange of information in either directions of transmission, obviously once the acquisition of all the existing codes by the detector 4' is completed. The above improvement opens further possibilities for application of the radio-identification system.

In operation, the field "Mode" is set at two bits; in this case, the old value '1' would be replaced by a '11' configuration, thereby signalling the transponders to send over serially the extended codes with no block coding, while the '00' configuration would replace the old value '0', thereby indicating that the mode "Master" is being entered. The remaining configurations are allotted to the two new modes of operation, as follows: the code '01' goes to writing into the memory 8, and the code '10' goes to reading from this memory. Thus, when the detector 4' intends to write into the memory of a specific transponder, it broadcasts a first string of bits comprising the following fields:

- the write code '01';

- the extended code of the transponder 3' to be communicated to;

- a first serial word that it intends to write into the memory 8.

The transponders 3' will all receive said string, and can decode it, whereafter they will compare the extended code contained in the received information with their own stored codes. The transponder that detects a match will write the received word at a first location in a dedicated partition of the memory 8, and then transmit back a serial code of "write executed". The transmission does not affect the other transponders, because the broadcast signal is taken by them to be background noise in the band of the receive filter, this on account of a suitable spacing being provided between the transmit and receive carriers. The detector 4' receives the executed code and issues, in the same mode as before, another word for writing at a consecutive location in the memory 8. The write operations follow until the information to be transferred is exhausted, whereafter the detector 4' can start a new operation of writing into the internal memory of another transponder, or alternatively start a reading operation, or even start a new cycle of acquisition of all the codes.

When the detector 4' intends to read from the memory 8 of a transponder, it is to broadcast a first string of bits comprising the following fields:

- the read code '10',

- the extended code of the transponder 3' to which it intends to communicate.

The transponders 3' will all receive the information, and compare it with their own stored codes; the transponder that detects a match will read a first word from the memory 8, starting with a first location in said partition, and transmit it serially to the detector 4'. The transmission leaves the other transponders unaffected, for the reasons previously specified. The detector 4' receives the incoming word and, if appropriate, requests that further words be sent over in the same mode as before. Once the reading operation is completed, the detector 4' can start a new operation of reading from the internal memory of another transponder, or alternatively start a write operation, or perhaps start a new cycle for acquisition of all the codes.

The management of the detector 4', in particular after the improvement to the protocol, can greatly benefit from the block CONTROL LOGIC 17 (Figure 7a) being optionally connected to a personal computer containing suitable software to generate a "user's friend" interface to the operator.

## Claims

1. A method of radio-identifying a plurality of coded entities, each having a transceiver for transmitting an individual identification code to a common transceiver preferably arranged to remote-power the transceivers of the coded entities, characterized in that it comprises the following, cyclically repeated steps:

   - broadcasting, from the common transceiver end, a synchronization code to mark the beginning of a transmissive frame of the serial type shared by all the transceivers;

   - recognizing, at the transceivers end, the coded entities of said synchronization code, and converting the individual code to a pulse located in a biunique way within the transmissive frame;

   - receiving, at the common transceiver end, the pulses transmitted within said transmissive frame by the transceivers of the plural coded entities, and reconverting the positions of the received pulses to the original individual codes.

2. A radio-identification method operating between a detector and a plurality of transponders preferably remote-powered from the detector, a generic transponder being associated with a respective entity which is allotted an individual code written into a memory of the transponder, characterized in that it comprises the following steps:

   a) converting, at the transponder end, the binary code expressed by code blocks of equal length which share the same positional value in all the transponders into biunique positions of as many pulses transmitted within a serial frame shared by the transponders and the detector;

   b) allotting, to the detector end, as many code identification nodes as there are pulses read from the received frame, it being possible to locate the nodes individually by allotting the original code blocks that result from the positional re-conversion of the pulses being read;

   c) broadcasting an information from the detector to the transponders for selectively urging one or more of the transponders to repeat step a) for the transmission of a code block positioned adjacent to the last transmitted block;

   d) revealing, at the detector end, any possible previous identity of partly read codes, also referred to as collision, by reading more than one pulse from the received frame, thereby determining new nodes at the transponder end linked to a preceding one by branches of a sequential search tree;

   e) updating the node coding by cumulating the code blocks resulting from the positional re-conversion of the pulses being read;

   f) iterating steps c), d) and e) above until all the code blocks available to all transponders are exhausted, thereby having gone completely through the branches of the search tree and having identified all the original codes in the final value of the code associated with the terminating nodes.

3. A radio-identification method according to Claim 2, characterized in that said serial frame shared by the detector and the transponders is promoted by the detector during a synchronizing step immediately before said step a) by broadcasting a serial synchronization signal that the transponders can recognize.

4. A radio-identification method according to Claim 2, characterized in that said information broadcast by the detector during said step c) to urge the transponders selectively is a serial string of bits comprising a first field indicating the position of a code block within the extended individual code, and a second field indicating the value thereof.

5. A radio-identification method according to either Claim 2 or 4, characterized in that said position of a code block is indicated by the value of a local pointer to an address of a word in said memory which contains the individual code in block form.

6. A radio-identification method according to Claim 2, characterized in that the detector broadcasts an information preliminary to any further executing step by setting the transponders for serial transmission of the complete individual code.

7. A radio-identification method according to Claim 6, characterized in that, should the detector detect collision of serial codes from the transponders, the detector broadcasts a serial synchronization signal which is used by the transponders to generate said serial frame shared by the detector and the transponders and introduce said steps from a) onward.

8. A radio-identification method according to either Claim 6 or 7, characterized in that, once all the individual codes are read, the step of having the complete individual code transmitted serially by the present transponders, and any subsequent steps, are reiterated, thereby to enable the acquisition of any new transponders entering or exiting the receive field of the detector and make the radio-identification method a dynamic method.

9. A radio-identification method according to Claim 2, characterized in that upon completion of said step f) for identifying all the codes, the following additional steps are carried out:

   g) broadcasting, from the detector to the transponders, an information comprising a code for setting a write mode, said extended code of a selected transponder, and a word to be written into the memory of the selected transponder;

   h) decoding, at the transponder end, the received information and comparing said extended code present in the received information with the individual code stored in said memory, and activating the writing of said word into the memory when a match is revealed by the comparison;

   i) transmitting, from the selected transponder end, a code of executed write;

   j) reiterating steps g), h), i) above to completion of the write operations.

10. A radio-identification method according to Claim 2, characterized in that, on completion of said step f) for identifying all the codes, the following additional steps are carried out:

   p) broadcasting, from the detector to the transponders, an information comprising a code for setting a read mode, and comprising said extended code of a selected transponder;

   q) decoding, at the transponder end, the received information and comparing said extended code present in the received information with the individual code stored in said memory, and activating the reading of a memory word when a match is revealed by the comparison;

   r) transmitting the word read from the memory;

   s) reiterating steps p), q), r) above to completion of the read operations.

11. A radio-identification system, comprising a plurality of transponders (3,3') remote-powered from a detector (4,4'), wherein a generic transponder is associated with a respective entity having an associated individual code written in a transponder memory (8), characterized in that it comprises:

   - synchronization means (11,10,6) included with the detector (4,4') and the transponders (3,3') to mark the beginning of a transmissive frame of the serial type shared by the transponders and the detector;

   - transcoding means (7) included with the transponders (3,3') for converting the individual identification code to a transmission pulse positioned in a biunique way within the transmissive frame;

   - reverse transcoding means (12) included with the detector (4,4') to convert the positions of the pulses received within said transmissive frame back to the original individual codes.

**12.** A radio-identification system according to Claim 11, characterized in that said memory (8) of the generic transponder (3') is laid in the form of consecutive words storing as many adjacent blocks of equal length into which said individual code is divided, said transcoding means (7) generating the transmission pulses from as many memory words (8).

**13.** A radio-identification system according to Claim 12, characterized in that the detector (4') and transponders (3') further include protocol logic means (17,16) arranged to cooperate in the transmission of said code blocks by one or more of the transponders (3').

**14.** A radio-identification system according to Claim 13, characterized in that said protocol logic means (17) included with the detector (4') comprise suitable means to create a sequential code-reading tree formed of as many identification nodes (Cod1, Cod2, Cod11, Cod12) as there are different pulses read from the frames, as each frame is received, and a number of branches joining the nodes generated during a current reading operation (Cod11, Cod12) to a node of a previous reading operation (Cod1), in turn selected, the nodes being coded by converting the positions of the received pulses back to the original codes cumulated at each reading operation (25AB 78A3,AB52 0101,AB52 0E57).

**15.** A radio-identification system according to either Claim 13 or 14, characterized in that said protocol logic means (17) included with the detector (4') comprise suitable means to generate a selecting serial information for broadcasting to said protocol logic means (16) included with the transponders (3') and urge the selected transponders to send a new code block.

**16.** A radio-identification system according to Claim 15, characterized in that said generic transponder (3') includes a pointer (15) to a word address in said individual code memory (8), the pointer (15) being incremented by the protocol logic means (16) included in the transponders (3') according to said information of selection received.

Serial information (digit 9)

Bit | 0 | 1 | 2 | 3 |

Start          Stop

FIG. 1

Parallel information (digit 9)

Bit 0

Bit 1

Bit 2

Bit 3

Start      Stop

FIG. 2

00001111111111111100 .....

0000

0001
0010
0011
0100
0101

1111

FIG. 6

0000000100100011010001010110011110001001101010111100110110111101111

FIG. 6a

EP 1 063 604 A1

FIG. 3

EP 1 063 604 A1

FIG. 4a

DETECTOR

TRANSCEIVER 10

CLK GENERATOR 11

POWER SUPPLY 14

REVERSE TRANSCODER 12

CODE DISPLAY 13

4

FIG. 4

BROADCASTING TAG

TRANSCEIVER 5

SYNCHRO 6

RF/DC CONVERTER 9

TRANSCODER 7

CODE MEMORY 8

3

FIG. 7a

DETECTOR

TRANSCEIVER 10

CLK GENERATOR 11

POWER SUPPLY 14

REVERSE TRANSCODER 12

CODE DISPLAY 13

PROTOCOL LOGIC 17

4'

FIG. 7

TRANSPONDER

TRANSCEIVER 5

SYNCHRO 6

RF/DC CONVERTER 9

TRANSCODER 7

CODE MEMORY 8

POINTER 15

PROTOCOL LOGIC 16

3'

FIG. 5

| Code | Signal |
|---|---|
| ABC1 | |
| 532A | |
| ABCB | |
| Signal received by the reader | |

FIG. 8a

| Code | Signal |
|---|---|
| ABC1 | |
| 532A | |
| ABCB | |
| Signal received by the reader | |

FIG. 8b

| Signal received by the reader | |
|---|---|

FIG. 8c

| Reader | | | 3 different Transponders | | | | | |
|---|---|---|---|---|---|---|---|---|
| Send  --  | Received Informatio Action | | Send | | | Local pointer | | |
| 1111 1111 1 | none | Normal Interr. | | | | | | |
| | | | AB52 0101 | AB52 0E57 | 25AB 78A3 | NULL | NULL | NULL |
| | Collision | Start Maestro | | | | | | |
| 0000 0000 0 | | Posizione 0 | | | | | | |
| | | Unità – | A | A | 2 | AB52 0101 | AB52 0E57 | 25AB 78A3 |
| | Nb transponder >= 2 | Cod1 = 'A' | | | | | | |
| | | Cod2 = '2' | | | | | | |
| 0000 0010 0 | | Posizione 0 | | | | | | |
| | | Unità '2' | None | None | 5 | AB52 0101 | AB52 0E57 | 25AB 78A3 |
| | Nb transponder >= 2 | Cod1 = 'A' | | | | | | |
| | | Cod2 = '25' | | | | | | |
| 0001 0101 0 | | Posizione 1 | | | | | | |
| | | Unità '5' | None | None | A | AB52 0101 | AB52 0E57 | 25AB 78A3 |
| | Nb transponder >= 2 | Cod1 = 'A' | | | | | | |
| | | Cod2 = '25A' | | | | | | |
| ___ | ___ | ___ | ___ | ___ | ___ | ___ | ___ | ___ |
| 0110 1010 0 | | Posizione 6 | | | | | | |
| | | Unità 'A' | None | None | 3 | AB52 0101 | AB52 0E57 | 25AB 78A3 |
| | Nb transponder >= 2 | Cod1 = 'A' | | | | | | |
| | | Cod2 = '25AB 78A3' | | | | | | |
| 0000 1010 0 | | Posizione 0 | | | | | | |
| | | Unità 'A' | B | B | None | AB52 0101 | AB52 0E57 | 25AB 78A3 |
| | Nb transponder >= 2 | Cod1 = 'AB' | | | | | | |
| | | Cod2 = '25AB 78A3' | | | | | | |
| 0001 1011 0 | | Posizione 1 | | | | | | |
| | | Unità 'B' | 5 | 5 | None | AB52 0101 | AB52 0E57 | 25AB 78A3 |
| | Nb transponder >= 2 | Cod1 = 'AB5' | | | | | | |
| | | Cod2 = '25AB 78A3' | | | | | | |
| 0010 0101 0 | | Posizione 2 | | | | | | |
| | | Unità '5' | 2 | 2 | None | AB52 0101 | AB52 0E57 | 25AB 78A3 |
| | Nb transponder >= 2 | Cod1 = 'AB52' | | | | | | |
| | | Cod2 = '25AB 78A3' | | | | | | |
| 0011 0010 0 | | Posizione 3 | | | | | | |
| | | Unità '2' | 0 | 0 | None | AB52 0101 | AB52 0E57 | 25AB 78A3 |
| | Nb transponder >= 2 | Cod1 = 'AB52 0' | | | | | | |
| | | Cod2 = '25AB 78A3' | | | | | | |
| 0100 0000 0 | | Posizione 4 | | | | | | |
| | | Unità '0' | 1 | E | None | AB52 0101 | AB52 0E57 | 25AB 78A3 |
| | Nb transponder >= 3 | Cod11 = 'AB52 01' | | | | | | |
| | | Cod12 = 'AB52 0E' | | | | | | |
| | | Cod2 = '25AB 78A3' | | | | | | |
| 0101 0001 0 | | Posizione 5 | | | | | | |
| | | Unità '1' | 0 | None | None | AB52 0101 | AB52 0E57 | 25AB 78A3 |
| | Nb transponder >= 3 | Cod11 = 'AB52 010' | | | | | | |
| | | Cod12 = 'AB52 0E' | | | | | | |
| | | Cod2 = '25AB 78A3' | | | | | | |
| 0110 0001 0 | | Posizione 6 | | | | | | |
| | | Unità '0' | 1 | None | None | AB52 0101 | AB52 0E57 | 25AB 78A3 |
| | Nb transponder >= 3 | Cod11 = 'AB52 0101' | | | | | | |
| | | Cod12 = 'AB52 0E' | | | | | | |
| | | Cod2 = '25AB 78A3' | | | | | | |
| 0101 1110 0 | | Posizione 5 | | | | | | |
| | | Unità 'E' | None | 5 | None | AB52 0101 | AB52 0E57 | 25AB 78A3 |
| | Nb transponder >= 3 | Cod11 = 'AB52 0101' | | | | | | |
| | | Cod12 = 'AB52 0E5' | | | | | | |
| | | Cod2 = '25AB 78A3' | | | | | | |
| 0110 0101 0 | | Posizione 6 | | | | | | |
| | | Unità '5' | None | 7 | None | AB52 0101 | AB52 0E57 | 25AB 78A3 |
| | Nb transponder = 3 | Cod11 = 'AB52 0101' | | | | | | |
| | | Cod12 = 'AB52 0E57' | | | | | | |
| | | Cod2 = '25AB 78A3' | | | | | | |

TRS1 cod. AB52 0101
TRS2 cod. AB52 0ES7
· TRS3 cod. 25AB 7843 /

FIG. 10

**European Patent Office**

## EUROPEAN SEARCH REPORT

Application Number

EP 99 20 2029

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 777 194 A (RAIMBAULT PIERRE) 4 June 1997 (1997-06-04) * page 5, line 53 - page 6, line 16 * * page 11, line 2 - line 40 * * page 13, line 46 - page 15, line 2 * * page 18 - page 26 * * figures 1-6 * | 1-3,9-16 | G06K7/00 |
| X | GB 2 259 227 A (MARCONI GEC LTD) 3 March 1993 (1993-03-03) * page 17, paragraph 2 - page 20, paragraph 2 * * figures 2-4 * | 1,11 | |
| X | US 5 339 073 A (DODD HAROLD ET AL) 16 August 1994 (1994-08-16) * column 5, line 7 - line 61 * * figures 1-6 * | 2,3 | |
| X | US 5 910 779 A (SEIFERT FRANZ ET AL) 8 June 1999 (1999-06-08) * column 2, line 39 - column 3, line 33 * * figures 1,2 * | 1 | TECHNICAL FIELDS SEARCHED (Int.Cl.7) G06K |

The present search report has been drawn up for all claims

| Place of search | Date of completion of the search | Examiner |
|---|---|---|
| THE HAGUE | 8 December 1999 | de Ronde, J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**EP 1 063 604 A1**

## ANNEX TO THE EUROPEAN SEARCH REPORT
## ON EUROPEAN PATENT APPLICATION NO.

EP 99 20 2029

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-1999

| Patent document cited in search report | | Publication date | Patent family member(s) | | Publication date |
|---|---|---|---|---|---|
| EP 0777194 | A | 04-06-1997 | FR | 2741979 A | 06-06-1997 |
| | | | CA | 2191787 A | 02-06-1997 |
| GB 2259227 | A | 03-03-1993 | NONE | | |
| US 5339073 | A | 16-08-1994 | CA | 1337946 A | 16-01-1996 |
| | | | AT | 110480 T | 15-09-1996 |
| | | | DE | 3851168 D | 29-09-1994 |
| | | | DE | 3851168 T | 30-03-1995 |
| | | | EP | 0285419 A | 05-10-1988 |
| | | | GB | 2202981 A,B | 05-10-1988 |
| US 5910779 | A | 08-06-1999 | EP | 0773451 A | 14-05-1997 |
| | | | JP | 9147284 A | 06-06-1997 |

EPO FORM P0459

For more details about this annex : see Official Journal of the European Patent Office, No. 12/82